Europäisches Patentamt

European Patent Office

Office européen des brevets

(11) Veröffentlichungsnummer : **0 305 763 B1**

# EUROPÄISCHE PATENTSCHRIFT

(45) Veröffentlichungstag der Patentschrift :
**10.07.91 Patentblatt 91/28**

(51) Int. Cl.$^5$ : **F01D 15/10,** H02K 7/18,
**F01D 5/02**

(21) Anmeldenummer : **88112754.2**

(22) Anmeldetag : **05.08.88**

(54) **Energieversorgungsanlage.**

(30) Priorität : **06.08.87 DE 3726104**

(43) Veröffentlichungstag der Anmeldung :
**08.03.89 Patentblatt 89/10**

(45) Bekanntmachung des Hinweises auf die
Patenterteilung :
**10.07.91 Patentblatt 91/28**

(84) Benannte Vertragsstaaten :
**DE FR GB IT NL SE**

(56) Entgegenhaltungen :
**EP-A- 0 026 584**
**WO-A-84/03538**
**DE-A- 2 105 494**
**DE-C- 305 955**
**FR-A- 534 202**
**GB-A- 23 689**
**GB-A- 1 141 001**
**US-A- 2 984 751**
**US-A- 3 039 007**

(73) Patentinhaber : **MTU MOTOREN- UND
TURBINEN-UNION MÜNCHEN GMBH
Dachauer Strasse 665 Postfach 50 06 40
W-8000 München 50 (DE)**

(72) Erfinder : **Rohra, Alois
Bacherstr. 45
W-8000 München 90 (DE)**
Erfinder : **Albers, Martin, Dr.
Borinskistr. 2a
W-8000 München 60 (DE)**
Erfinder : **Weist, Günther
Lerchenweg 4c
W-8138 Andechs (DE)**
Erfinder : **Grieb, Hubert, Dr. Ing.
Nimrodstr. 38
W-8034 Germering (DE)**
Erfinder : **Moddemann, Horst
Im Alefoldchen 1
W-5340 Bad Honnef 6 (DE)**

EP 0 305 763 B1

## Beschreibung

Die Erfindung betrifft eine Energieversorgungsanlage gemäß dem Oberbegriff des Patentanspruchs 1. Eine solche Energieversorgungsanlage ist z.B. aus der WO-84/03538 bekannt.

Aus der DE-C-305 955 ist es bekannt, einen Nutzturbinenrotor mit einem Generatorläufer integral zu koppeln, wobei der Generatorläufer einen Stützkern umfaßt, auf dem Permanentmagnete angebracht sind. Schließlich ist es aus der GB-A-1 141 001 bekannt, bei einer Gasturbine einen Rotor vorzusehen, auf dem eine Turbine, ein Kompressor und ein Generator angeordnet sind.

Ausgangspunkt für die vorliegende Erfindung ist die Überlegung, daß zur Energieversorgung für Unterseeboote gattungsgemäße Energieversorgungsanlagen gut geeignet wären, wenn die bei bekannten Anlagen aufgrund der hohen Drehzahlen entstehende Schallemission zu reduzieren wäre, da hierdurch die akustische Ortung eines Unterseeboots erschwert würde.

Aufgabe der Erfindung ist es deshalb, eine gattungsgemäße Energieversorgungsanlage zu schaffen, die hinsichtlich ihrer Schallemission erheblich verbessert ist. Erfindungsgemäß wird diese Aufgabe durch die Merkmalskombination des geltenden Hauptanspruchs gelöst.

Es wurde herausgefunden, daß ein wesentlicher Teil der Schallemission ihre Ursache in Geräuschen hat, die im Bereich des Rotors entstehen. Die erfindungsgemäße Merkmalskombination hat den Vorteil, daß sich die im Bereich des Rotors entstehenden Geräusche auf ein Minimum reduzieren lassen. So läßt sich insbesondere vermeiden, daß an Verbindungsstellen von Rotorelementen durch Setzbeträge Unwuchten im Betrieb entstehen, die zu einer verstärkten Lärmemission führen. Durch die Auswahl von einem oder mehreren Werkstoffen mit hoher Eigendämpfung für einzelne Teile des Rotors werden die Schwingungen am Ort ihrer Entstehung bereits stark abgedämpft. Über die Mehrflächengleitlager wird eine Übertragung der trotzdem auftretenden Rotorschwingungen auf das Gehäuse weiterhin abgedämpft. Die fugenlose Anordnung von Permanentmagneten auf einem Stützkern des Generatorläufers schließlich ermöglicht eine minimale Lärmentstehung im Bereich des Generators. Unter integral hergestelltem Rotor ist in diesem Zusammenhang zu verstehen, daß dieser aus mehreren Bestandteilen unlösbar zusammengesetzt ist, beispielsweise mittels Verschweißen oder Verlöten. Der so gebildete Rotor wird bei Betriebsdrehzahl gewuchtet, wodurch sichergestellt ist, daß im Betrieb keine neuen Unwuchten entstehen

In bevorzugter Weiterbildung der Erfindung ist ein Wellenabschnitt des Rotors zwischen Turbine und Generatorläufer aus einem Werkstoff hoher Eigendämpfung aufgebaut. In diesem Abschnitt, in dem die turbinenseitige Lagerung des Rotors erfolgt, läßt sich der entstehende Lärm günstig vermindern. Als Werkstoffe kommen da beispielsweise Stahlguß, in Feinguß hergestellte Ni-Basiswerkstoffe oder besondere hitzebeständige faserverstärkte Werkstoffe zur Anwendung.

Eine weitere vorteilhafte Ausführungsform der Erfindung sieht vor, daß die Mehrflächengleitlager mit Wasser geschmiert sind. Dies hat den Vorteil, daß die Abdichtung der Lagerkammern gegenüber der Umgebung unproblematisch ist. Es können, verglichen mit ölgeschmierten Lagern, geringe Leckströme in Kauf genommen werden, da als Verbrennungsprodukt eine bestimmte Menge Wasser entsteht.

## Ansprüche

1. Energieversorgungsanlage mit einer Gasturbine, bestehend aus Verdichter, Brennkammer und Turbine, die im quasi-geschlossenen Kreislauf außenluftunabhängig betreibbar ist und einen turbinengekoppelten Generator mit einem Generatorläufer und einem Stator aufweist, gekennzeichnet durch die Kombination folgender Merkmale :

a) der Generatorläufer umfaßt einen Stützkern, auf dem Permanentmagnete fugenlos angebracht sind,

b) es ist nur ein einzelner ingetral hergestellter Rotor vorgesehen, welcher die Turbine, den Generatorläufer und den Verdichter umfaßt,

c) der Rotor ist mittels Mehrflächengleitlagern gehäuseseitig abgestützt,

d) der Rotor besteht aus einem oder mehreren Werkstoffen mit hoher Eigendämpfung.

2. Energieversorgungsanlage nach Anspruch 1, dadurch gekennzeichnet, daß ein Wellenabschnitt des Rotors zwischen Turbine und Generatorläufer aus einem Werkstoff hoher Eigendämpfung besteht.

3. Energieversorgungsanlage nach Anspruch 1 oder Anspruch 2, dadurch gekennzeichnet, daß die Mehrflächengleitlager mit Wasser geschmiert sind.

## Claims

1. Energy supply installation having a gas turbine, consisting of compressor, combustion chamber and turbine, which can be operated in the quasi-closed circuit independently of the outer air and has a turbine-coupled generator having a generator rotor and a stator, characterized by the combination of the following features :

a) the generator rotor comprises a supporting core on to which permanent magnets are applied in jointless manner,

b) only a single integrally manufactured rotor is provided which encloses the turbine, the generator rotor and the compressor,

c) the rotor is supported by means of multi-surface sliding bearings,

d) the rotor consists of one or several materials with high inherent damping.

2. Energy supply installation according to claim 1, characterized in that a shaft section of the rotor between turbine and generator rotor consists of a material of high inherent damping.

3. Energy supply installation according to claim 1 or claim 2, characterized in that the multi-surface sliding bearing is lubricated with water.

## Revendications

1. Centrale de délivrance d'énergie avec une turbine à gaz, installation constituée d'un compresseur, d'une chambre de combustion et d'une turbine, qui est susceptible d'être exploitée en circulation quasi fermée, indépendamment de l'air extérieur et qui comporte un générateur couplé à la turbine avec un rotor de générateur et un stator, installation caractérisée en ce qu'elle comporte la combinaison des particularités suivantes :

a) le rotor du générateur comprend un noyau d'appui sur lequel sont rapportés, sans joint, des aimants permanents,

b) il est prévu un unique rotor réalisé de façon intégrale qui comprend la turbine, le rotor du générateur et le compresseur,

c) le rotor est supporté côté carter par des paliers lisses à surfaces multiples,

d) le rotor est constitué d'un ou plusieurs matériaux ayant un amortissement propre élevé.

2. Centrale de délivrance d'énergie selon la revendication 1, caractérisée en ce qu'un tronçon d'arbre du rotor entre la turbine et le rotor du générateur est constitué par un matériau ayant un amortissement propre élevée.

3. Centrale de délivrance d'énergie selon la revendication 1 ou la revendication 2, caractérisée en ce que les paliers lisses à surfaces multiples sont lubrifiés à l'eau.